# EUROPÄISCHE PATENTSCHRIFT

(11) **EP 2 282 880 B1**
(45) Veröffentlichungstag und Bekanntmachung des Hinweises auf die Patenterteilung: **02.11.2011**
(21) Anmeldenummer: 09714736.7
(22) Anmeldetag: 27.02.2009
(51) Int. Cl.: B29C 33/04, B29C 45/73

(54) **KÜHLMITTELVERTEILUNG ZUR WERKZEUGKÜHLUNG**
COOLANT DISTRIBUTION FOR COOLING A TOOL
DISTRIBUTION DE RÉFRIGÉRANT POUR LE REFROIDISSEMENT D'UN OUTIL

(30) Priorität: 29.02.2008 DE 102008000452
(43) Veröffentlichungstag der Anmeldung: 16.02.2011
(73) Patentinhaber: Stemke Kunststofftechnik GmbH, 04720 Döbeln (DE)
(72) Erfinder: STEMKE, Lothar, 04720 Döbeln (DE)
(74) Vertreter: Bauer, Steffen
(86) Internationale Anmeldenummer: PCT/EP2009/052340
(87) Internationale Veröffentlichungsnummer: WO 2009/106601

(56) Entgegenhaltungen:
- EP-A- 0 976 517
- DE-A1- 3 322 312
- DE-A1- 4 242 024
- DE-U1- 20 310 275
- JP-A- 6 071 713
- JP-A- 62 161 515
- JP-A- 2000 006 166
- JP-A- 2000 246 778
- JP-A- 2005 335 403
- THEINEL P ET AL: "KUERZERE HUEHLZEITEN" PLASTVERARBEITER, HUETHIG GMBH, HEIDELBERG, DE, Bd. 56, Nr. 8, 1. August 2005 (2005-08-01), Seite 78/79, XP001246842 ISSN: 0032-1338
- "Hot-Spot Kühlung im geschlossenen Kreislauf" KUNSTSTOFFE, CARL HANSER VERLAG, MUNCHEN, DE, 1. Januar 2008 (2008-01-01), Seite 25, XP001538636 ISSN: 0023-5563

## Beschreibung

Werkzeuge von Kunststoffverarbeitungsmaschinen, aber auch Druckgussmaschinen, Extrusionsmaschinen, Schweißvorrichtungen und sonstigen Einrichtungen, bei denen Wärme abgeführt werden muss, werden punktuell und/oder flächig gekühlt, sobald es der Be- oder Verarbeitungsprozess erfordert. Dadurch wird einerseits dem Werkstück gezielt und andererseits dem Werkzeug insgesamt Wärme entzogen, so dass ein möglichst schnelles Abkühlen stattfindet, wodurch die Taktzeiten verkürzt werden. Die Erfindung betrifft ein derartiges Kühlsystem.

Aus der DE 199 18 428 C1 ist ein Verfahren zur Kühlung von Werkzeugen mit Kohlendioxid (CO₂) bekannt, wonach Werkzeugbereiche mit zu hohen Temperaturen gezielt gekühlt werden sollen. Das Anwendungsgebiet des bekannten Verfahrens erstreckt sich über sinterporöse Materialien hinaus auf Werkzeuge, die aus massiven Materialien wie Stahl, Aluminium, Kupfer oder sonstigen Legierungen bestehen. Ein Vorteil des bekannten Verfahrens zeigt sich in der Vermeidung von örtlich auftretenden Temperaturspitzen, wodurch die Zykluszeiten und Formteilfehler reduziert werden können. Das bekannte Verfahren ist **dadurch gekennzeichnet, dass** über ein Zuleitungssystem unter Druck befindliches Kohlendioxid in dafür vorgesehene Werkzeugbereiche geleitet wird, um diese Bereiche durch eine gezielte Expansion des Kohlendioxids zu kühlen. Die bevorzugten Werkzeugbereiche sind jene, an denen aufgrund zu hoher Werkzeugtemperaturen Glanzstellen oder Glanzunterschiede an den Kunststoffartikeln entstehen, Einfallstellen auftreten, die Entformung Probleme bereitet sowie allgemein zu hohe und/oder zu Schädigungen des Werkzeugs führende Temperaturen entstehen können. Die Zuführung des verdichteten Kohlendioxids erfolgt über kleine Röhrchen oder flexible Schläuche. Bei Austritt aus den Zuleitungen entspannt sich das verdichtete Kohlendioxid, wodurch dem umgebenden Material Wärme entzogen wird. Durch nachströmendes Kohlendioxid wird das expandierte Gas über den Freiraum zwischen der Zuleitung und der Wandung des Expansionsraumes aus dem Werkzeug transportiert, so dass es in die Atmosphäre entweichen kann oder über ein spezielles System aufgefangen und anschließend wieder aufbereitet wird. Zur flächigen Werkzeugkühlung ist daneben die Wasser-Impulskühlung bekannt. Das Verfahren basiert auf einem offenen oder geschlossenen Kühlwassersystem, wobei das Werkzeug Strömungskanäle aufweist, die den Prozessgegebenheiten und der Geometrie von Werkstück und Werkzeug entsprechend ausgebildet sind. Damit sind eine effiziente Kühlung des Werkzeugs und der eingespritzten Massen und damit eine merkliche Reduzierung der Taktzeiten möglich. Allerdings kann das Wasser als Kühlmedium zu Kalkablagerungen in den Strömungskanälen führen, so dass die Kühlwirkung nachlässt. Im schlechtesten Fall kann es zum Kanalverschluss und damit zur völligen Unwirksamkeit des Kühlsystems kommen. Eine weitere bekannte Lösung beschreibt die DE 102 56 036 A1 mit einem Verfahren und einer Vorrichtung zur Werkzeugkühlung nach dem Prinzip der Kohlendioxid-Expansionskühlung. Die bekannte Vorrichtung ist gekennzeichnet durch eine Vielzahl von Bohrungen, in die jeweils eine am freien Ende offene Kapillare ragt. Die Kapillaren sind mit einem Sammelrohr für die Gaszuführung verbunden, die Bohrungen mit einem Sammelkanal zur Gasrückführung. Allerdings zeigt die bekannte Lösung keinen Weg, wie bei einer großen Zahl von Kühlstellen, die womöglich noch örtlich verteilt angeordnet sind, die Kühlstellen effizient und mit hinreichender Sicherheit mit Kühlmittel versorgt werden sollen, da eine einfache Parallelschaltung von Kapillaren diesen Anforderungen nicht gerecht werden kann.
Die DE 33 22 312 A1 beschreibt eine Kühlmittetverteilung zur Werkzeugkühlung an Kühlstellen, die aus einem mit einem Zuführstrang verbundenen Kapillarrohr und einem mit einem Rückführstrang verbundenen Expansionsraum bestehen, in den das Kapillarrohr mündet. Durch das Kapillarrohr gelangt ein flüssiges Kühlmittel in den Expansionsraum, in dem es durch Entspannung verdampft und als Gas unter Aufnahme von Wärme abgeleitet wird. Die bekannte Lösung umfasst verzweigte Zuführstränge zur Versorgung einer Mehrzahl von Kühlstellen und zu einer Sammelleitung zusammengeführte Rückführstränge. Die Verbindung zwischen einer Kühlmittelquelle und den Zuführsträngen ist als Schlauchleitung ausgebildet und verfügt über ein Magnetventil welches zur Steuerung des Volumenstromes des Kühlmittels dient.

Somit ergibt sich als Aufgabe der Erfindung, ein Werkzeugkühlsystem der eingangs genannten Art zu schaffen, das sich durch eine verbesserte Zuführung von Kühlmittel zu den Kühlstellen in Form einer Verteilung auszeichnet und damit zu einer erhöhten Effizienz im Fertigungsprozess und einer Verbesserung der Qualität der Produkte führt.

Die Aufgabe wird gemäß der Lehre des Hauptanspruchs gelöst durch eine Kühlmittelverteilung zu Kühlstellen, die aus mit einem Zuführstrang verbundenen Kapillarrohr und einem mit einem Rückführstrang verbundenen Expansionsraum bestehen, in welchen das Kapillarrohr mündet, so dass ein flüssig zu den Kühlstellen geleitetes Kühlmittel verdampft und als Gas abgeleitet wird. Dazu weist ein an eine Kühlmittelquelle und eine Kühlmittelsenke anschließbarer hermetisch geschlossener Verteilerblock in wenigstens einer Ebene eingeformte Kühlmittelkanäle auf und ist an ein Werkzeug anflanschbar ausgebildet. Die Kühlmittelkanäle sind als zu Kühlstellen verzweigende Zuführstränge und einem von den Kühlstellen zu einer Sammelleitung vereinigten Rückführstrang ausgebildet. Die Kühlmittelzufuhr erfolgt von der Kühlmittelquelle zu den Zuführsträngen über eine Schlauchleitung, die an einen als Schlauchkupplung ausgebildeten Eingang angeschlossen wird, und wenigstens eine dem Eingang nachgeschaltete Magnetschalteinheit. Die Kühlmittelableitung von der Rückführsammelleitung erfolgt über eine Schlauchleitung zur Kühlmittelsenke, indem der Ausgang der Rückführsammelleitung als Schlauchkupplung ausgebildet ist, an welche die Schlauchleitung angeschlossen wird.

Vorteilhafte Weiterbildungen und Ausgestaltungen der Erfindung ergeben sich aus den Unteransprüchen. Die Erfindung ist durch an verschiedene Anwendungsfälle angepasste Ausbildungen der Kühlmittelkanäle gekennzeichnet. Eine erste vorteilhafte Ausbildung der Erfindung besteht darin, dass die Kühlmittelkanäle in den Verteilerblock eingebrachte Bohrungen sind, die über Verbindungsstellen bildende Kreuzungen und/oder direkt zu den Kühlstellen führen und nach außen hermetisch verschlossen sind. Eine weitere vorteilhafte Ausbildung der Erfindung besteht darin, dass der Verteilerblock aus wenigstens zwei Platten besteht und die Kühlmittelkanäle in wenigstens einer Platte als rillenartige Vertiefungen ausgebildet und mittels einer anderen Platte abgedeckt sind. Eine weitere vorteilhafte Ausbildung der Erfindung besteht darin, dass die Kühlmittelkanäle derart realisiert sind, dass in den Verteilerblock rillenartige Vertiefungen eingearbeitet sind, in denen das Kühlmittel führende Rohre unlösbar angeordnet sind. Weitergebildet wird die Erfindung, indem wenigstens eine Magnetschalteinheit mittels Steckverbindungen an den Zuführstrang angeschlossen ist. Der Gegenstand der Erfindung besteht ferner darin, dass das Kapillarrohr an einem Verbindungselement mit einem Eingang und einem Ausgang befestigt ist, so dass das Kapillarrohr über den Eingang leckfrei mit dem Zuführstrang und der Expansionsraum über den Ausgang leckfrei mit dem Rückführstrang verbunden sind. Die Erfindung ist vorteilhaft ausgestaltet, indem das Verbindungselement als in eine im Verteilerblock angeordnete Haltebuchse steckbar ausgebildet ist.

Mittels der Zeichnung werden die Merkmale der Erfindung nachfolgend näher erläutert. Die Zeichnung zeigt in

Fig. 1 eine bevorzugte Ausführungsform der Erfindung und

Fig. 2 eine Kühlstelle der bevorzugten Ausführungsform.

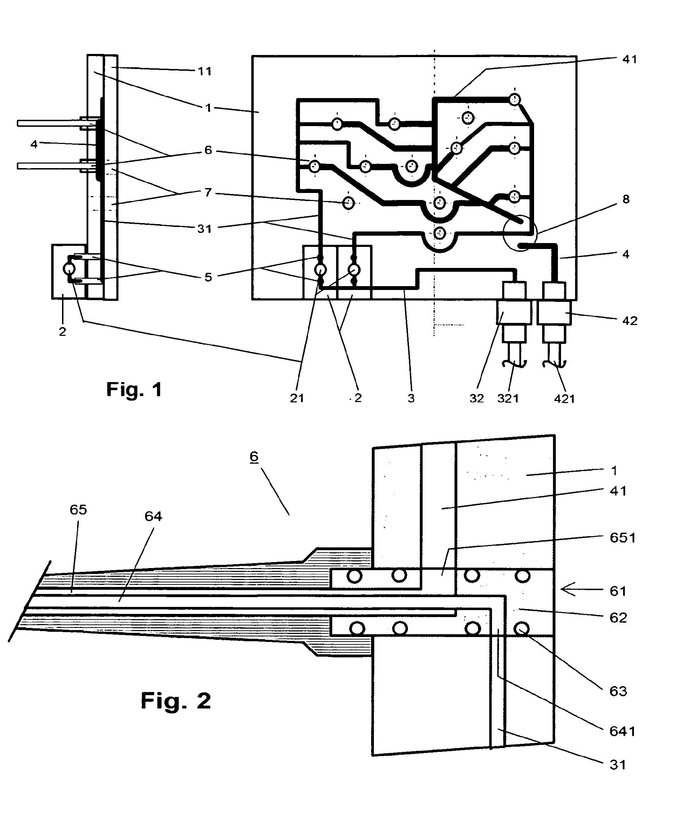

Fig. 1 zeigt eine schematische Aufsicht auf eine mit Kühlmittelkanälen 3, 31, 4, 41 versehene Platte 1 eines erfindungsgemäßen Verteilerblocks sowie einen schematisierten Querschnitt durch den um eine Abdeckplatte 11 ergänzten Verteilerblock. In die Platte 1 sind in einer ersten Ebene die Kühlmittelkanäle 3, 31, 4, 41 gefräst, so dass zu sämtlichen Kühlstellen 6 Zuführstränge 31 hin und Rückführstränge 41 weg führen. Bei der Strangführung sind neben den Kühlstellen 6 die Positionen von Auswerferstiften 7 zu berücksichtigen, so dass die Strangverläufe mit entsprechenden Bögen versehen sind. Die Strangverläufe weisen indes in der Praxis entgegen der aus Gründen der Übersichtlichkeit vereinfachten Darstellung keine abrupten Abwinkelungen sondern strömungstechnisch günstiger wirkende Krümmungen auf. Die Rückführstränge 41 sind zu einer Sammelleitung 4 vereinigt, die an eine Schlauchkupplung 42 geführt ist, über die und eine daran angeschlossene Schlauchleitung 421 die Rückführung des Kühlmittels zu einer Kühlmittelsenke, beispielsweise einem Verdichtereingang erfolgt. Mittels einer Unterführung 8, die vorteilhaft als gepresste Brücke ausgeführt sein kann, kreuzt die Rückführsammelleitung 4 einen Zuführstrang 31. Die Zuführstränge 31 stellen Verzweigungen eines Eingangszuführstrangs 3 dar, indem der Eingangszuführstrang 3 an zwei Magnetschalteinheiten 2 mit je einem Magnetschalter 21 geführt ist, von denen aus die Zuführstränge 31 zu den Kühlstellen 6 weiter verzweigt sind. Die Magnetschalter 21 sind vorteilhaft durch Steckverbindungen 5 in die Zuführstränge 31 eingebunden. Der Eingangszuführstrang 3 ist mit einer Schlauchkupplung 32 verbunden, an die eine Schlauchleitung 321 angeschlossen ist. Die Schlauchleitung 321 führt zu einer Kühlmittelquelle, beispielsweise dem Ausgang eines Verdichters. Von der Kühlmittelquelle strömt über die Schlauchleitung 321, die Schlauchkupplung 32, den Eingangszuführstrang 3, die Magnetschalter 21 und die Zuführstränge 31 flüssiges Kühlmittel zu den Kühlstellen 6, die anhand von Fig. 2 im Einzelnen erläutert werden. In den Expansionsräumen 65 der Kühlstellen 6 verdampft das Kühlmittel und wird gasförmig über die Rückführstränge 41, die Sammelleitung 4, die Schlauchkupplung 42 und die Schlauchleitung 421 zur Kühlmittelsenke geführt, um wieder verflüssigt zu werden, so dass ein durch die zweite Platte 11 hermetisch geschlossener Kühlblock mit innerer Verzweigung und einer Eingangs- und einer Ausgangskupplung entsteht, der über geeignete Mittel mit einem Kunststoffformwerkzeug verbunden werden kann.

Fig. 2 zeigt eine einzelne Kühlstelle 6 mit einem Kapillarrohr 64, das in einen Expansionsraum 65 mündet. Das Kapillarrohr 64 ist an einem Verbindungselement 62 befestigt, das über zwei Verbindungen 641, 651 verfügt. Die erste Verbindung 641 schließt leckfrei das Kapillarrohr 64 an den Zuführstrang 31 an. Die zweite Verbindung 651 schließt leckfrei den Expansionsraum 65 an den Rückführstrang 41 an. Das Verbindungselement 62 ist mittels der Öffnungen der Verbindungen 641, 651 und geeignet angeordneter Dichtelemente 63 in einer in der Platte 1 entsprechend angeordneten Haltebuchse 61 form- und kraftschlüssig gesteckt angeordnet.

## Patentansprüche

1. Kühlmittelverteilung zur Werkzeugkühlung durch Kühlstellen (6), die aus mit einem Zuführstrang (31) verbundenen Kapillarrohr (64) und einem mit einem Rückführstrang (41) verbundenen Expansionsraum (65) bestehen, in welchen das Kapillarrohr (64) mündet, so dass ein flüssig zu den Kühlstellen (6) geleitetes Kühlmittel verdampft und als Gas abgeleitet wird, **dadurch gekennzeichnet, dass** ein an eine Kühlmittelquelle und eine Kühlmittelsenke anschließbarer hermetisch geschlossener Verteilerblock (1, 11) in wenigstens einer Ebene eingeformte Kühlmittelkanäle (3, 31, 4, 41) aufweist und an ein Werkzeug anflanschbar ausgebildet ist, die Kühlmittelkanäle (3, 31, 4, 41) als zu Kühlstellen (6) verzweigende Zuführstränge (3, 31) und von den Kühlstellen (6) abgehende und zu einer Sammelleitung (4) vereinigte Rückführstränge (41) ausgebildet sind, die Kühlmittelzufuhr von der Kühlmittelquelle zu den Zuführsträngen (3, 31) über eine erste Schlauchleitung (321), die an einen als Schlauchkupplung (32) ausgebildeten Eingang angeschlossen wird, und wenigstens eine dem Eingang nachgeschaltete Magnetschalteinheit (2) erfolgt und die Kühlmittelableitung von der Rückführsammelleitung (4) über eine zweite Schlauchleitung (421) zur Kühlmittelsenke erfolgt, indem der Ausgang der Rückführsammelleitung (4) als Schlauchkupplung (42) ausgebildet ist, an welche die zweite Schlauchleitung (421) angeschlossen wird.

2. Kühlmittelverteilung nach Anspruch 1, **dadurch gekennzeichnet, dass** die Kühlmittelkanäle (3, 31, 4, 41) in den Verteilerblock (1) eingebrachte Bohrungen sind, die über Verbindungsstellen bildende Kreuzungen und/oder direkt zu den Kühlstellen (6) führen und nach außen hermetisch verschlossen sind.

3. Kühlmittelverteilung nach Anspruch 1, **dadurch gekennzeichnet, dass** der Verteilerblock (1, 11) aus wenigstens zwei Platten besteht und die Kühlmittelkanäle (3, 31, 4, 41) in wenigstens einer Platte (1) als rillenartige Vertiefungen ausgebildet und mittels einer anderen Platte (11) abgedeckt sind.

4. Kühlmittelverteilung nach Anspruch 1, **dadurch gekennzeichnet, dass** die Kühlmittelkanäle (3, 31, 4, 41) derart realisiert sind, dass in den Verteilerblock (1) rillenartige Vertiefungen eingearbeitet sind, in denen das Kühlmittel führende Rohre unlösbar angeordnet sind.

5. Kühlmittelverteilung nach Anspruch 1, 2, 3 oder 4, **dadurch gekennzeichnet, dass** wenigstens eine Magnetschalteinheit (2) mittels Steckverbindungen (5) an den Zuführstrang (3, 31) angeschlossen ist.

6. Kühlmittelverteilung nach Anspruch 1, 2, 3, 4 oder 5, **dadurch gekennzeichnet, dass** das Kapillarrohr (64) an einem Verbindungselement (62) mit einem Eingang und einem Ausgang befestigt ist, so dass das Kapillarrohr (64) über den Eingang leckfrei mit dem Zuführstrang (31) und der Expansionsraum (65) über den Ausgang leckfrei mit dem Rückführstrang (41) verbunden sind.

7. Kühlmittelverteilung nach Anspruch 6, **dadurch gekennzeichnet, dass** das Verbindungselement (62) als in eine im Verteilerblock (1, 11) angeordnete Haltebuchse (61) steckbar ausgebildet ist.

## Claims

1. Coolant distribution for the cooling of a tool through cooling points (6) that consists of a capillary tube (64) connected to a feeding loop (31) and an expansion chamber (65) connected to a return loop (41) into which the outlet of the capillary tube (94) opens so that a coolant conveyed in a liquid state to the cooling points (6) evaporates and is drawn off as a gas, **characterized by** the fact that a hermetically sealed distribution block (1, 11) attachable to a coolant source and a coolant sump is fitted with coolant channels (3, 31, 4, 41) carved out in at least one plane and conformed to be attachable to a tool by a flange, the coolant channels (3, 31, 4, 41) are conformed as feeding loops (3, 31) branching out to the cooling points (6) and as return loops (41) leaving the cooling points (6) to be joined in a collective conduit (4), the coolant feed occurs from the coolant source to the feeding loops (3, 31) through a first hose (321) attached to an inlet conformed as a hose coupling (32) and at least one magnetic switching unit (2) mounted after the inlet, and the coolant discharge occurs from the collective return conduit (4) through a second hose (421) to the coolant sump, where the outlet of the collective return conduit (4) is conformed as a hose coupling (42) to which the second hose (421) is attached.

2. Coolant distribution according to claim 1, **characterized by** the fact that the coolant channels (3, 31, 4, 41) are boreholes introduced into the distribution block (1), which lead to crossings forming connecting points and/or directly to the cooling points (6), and are hermetically sealed toward the outside.

3. Coolant distribution according to claim 1, **characterized by** the fact that the distribution block (1, 11) consists of at least two plates and the coolant channels (3, 31, 4, 41) and are conformed in at least one plate (1) as groove-like recesses and covered by another plate (11).

4. Coolant distribution according to claim 1, **characterized by** the fact that the coolant channels (3, 31, 4, 41) are realized so that grove-like recesses are carved out in the distribution block (1), in which the tubes conveying the coolant are set in an irremovable manner.

5. Coolant distribution according to claims 1, 2, 3 or 4, **characterized by** the fact that at least one magnetic switching unit (2) is attached to the feeding loop (3, 31) by plug-in connectors (5).

6. Coolant distribution according to claims 1, 2, 3, 4 or 5, **characterized by** the fact that the capillary tube (64) is fastened to a connecting element (62) with an inlet and an outlet, so that the capillary tube (64) is tightly connected to the feeding loop (31) by the inlet, and the expansion chamber (65) is tightly connected to the return loop (41) by the outlet.

7. Coolant distribution according to claim 6, **characterized by** the fact that the connecting element (62) is conformed as a supporting bushing (61) set in the distribution block in a plug-in manner.

## Revendications

1. Distribution de réfrigérant pour le refroidissement d'un outil par des points de refroidissement (6), qui se composent d'un tube capillaire (64) raccordé à une ligne d'alimentation (31) et d'une chambre d'expansion (65) raccordée à une ligne de retour (41), dans laquelle le tube capillaire (64) débouche, de telle manière qu'un réfrigérant conduit à l'état liquide aux points de refroidissement (6) se vaporise et soit évacué sous forme de gaz, **caractérisée en ce qu'**un bloc de distribution hermétiquement fermé (1, 11), pouvant être raccordé à une source de réfrigérant et à un collecteur de réfrigérant, présente des canaux de réfrigérant (3, 31, 4, 41) formés dans au moins un plan et peut être assemblé par bridage à un outil, les canaux de réfrigérant (3, 31, 4, 41) sont réalisés sous la forme de lignes d'alimentation (3, 31) branchées vers les points de refroidissement (6) et de lignes de retour (41) partant des points de refroidissement (6) et réunies en une conduite collectrice (4), l'alimentation de réfrigérant de la source de réfrigérant aux lignes d'alimentation (3, 31) est effectuée via une première conduite souple (321), qui est raccordée à une entrée réalisée sous la forme d'un raccord pour tuyau souple (32), et au moins une unité de commutation magnétique (2) installée après l'entrée, et l'évacuation de réfrigérant à partir de la conduite collectrice de retour (4) est effectuée via une deuxième conduite souple (421) vers le collecteur de réfrigérant, du fait que la sortie de la conduite collectrice de retour (4) est réalisée sous la forme d'un raccord pour tuyau souple (42), auquel la deuxième conduite souple (421) est raccordée.

2. Distribution de réfrigérant selon la revendication 1, **caractérisée en ce que** les canaux de réfrigérant (3, 31, 4, 41) sont des perçages pratiqués dans le bloc de répartition (1), qui conduisent aux points de refroidissement (6) via des croisements formant des points de liaison et/ou directement et sont hermétiquement fermés vers l'extérieur.

3. Distribution de réfrigérant selon la revendication 1, **caractérisée en ce que** le bloc de distribution (1, 11) se compose d'au moins deux plaques et les canaux de réfrigérant (3, 31, 4, 41) sont formés par des creux en forme de sillons dans au moins une plaque (1) et sont recouverts au moyen d'une autre plaque (11).

4. Distribution de réfrigérant selon la revendication 1, **caractérisée en ce que** les canaux de réfrigérant (3, 31, 4, 41) sont réalisés de telle manière que des creux en forme de sillons soient usinés dans le bloc de distribution (1), dans lesquels des tubes transportant le réfrigérant sont disposés de façon inamovible.

5. Distribution de réfrigérant selon la revendication 1, 2, 3 ou 4, **caractérisée en ce qu'**au moins une unité de commutation magnétique (2) est raccordée à la ligne d'alimentation (3, 31) au moyen de connecteurs à fiches (5).

6. Distribution de réfrigérant selon la revendication 1, 2, 3, 4 ou 5, **caractérisée en ce que** le tube capillaire (64) est fixé à un élément de liaison (62) présentant une entrée et une sortie, de telle manière que le tube capillaire (64) soit raccordé sans fuite par l'entrée à la ligne d'alimentation (31) et que la chambre d'expansion (65) soit raccordée sans fuite par la sortie à la ligne de retour (41).

7. Distribution de réfrigérant selon la revendication 6, **caractérisée en ce que** l'élément de liaison (62) est réalisé sous forme enfichable dans une douille de fixation (61) disposée dans le bloc de distribution (1, 11).
